# EUROPEAN PATENT SPECIFICATION

(11) **EP 1 953 539 B1**
(45) Date of publication and mention of the grant of the patent: **12.04.2017**
(21) Application number: 07024248.2
(22) Date of filing: 13.12.2007
(51) Int. Cl.: G01N 27/12

(54) **Gas sensor**
Gassensor
Capteur de gaz

(30) Priority: 30.01.2007 JP 2007019115; 18.06.2007 JP 2007159924
(43) Date of publication of application: 06.08.2008
(73) Proprietor: NGK Spark Plug Co., Ltd., Nagoya-shi, Aichi 467-8525 (JP)
(72) Inventor: Kida, Masahito, Nagoya-shi Aichi 467-8525 (JP); Kito, Shinichiro, Nagoya-shi Aichi 467-8525 (JP); Ikawa, Koichi, Nagoya-shi Aichi 467-8525 (JP); Tsujimura, Yoshinori, Nagoya-shi Aichi 467-8525 (JP); Kojima, Takio, Nagoya-shi Aichi 467-8525 (JP); Fujita, Koichi, Nagoya-shi Aichi 467-8525 (JP)
(74) Representative: Grünecker Patent- und Rechtsanwälte PartG mbB

(56) References cited:
- JP-A- 57 050 648
- JP-A- 2001 281 192
- JP-A- 2005 164 570
- US-A- 5 510 013
- US-A- 5 569 845
- US-A1- 2006 196 248

## Description

### BACKGROUND OF THE INVENTION

The present invention relates to a gas sensor having a gas-sensitive layer including a metal-oxide semiconductor as a major constituent.

It has heretofore known a gas sensor adapted to support a noble metal such as platinum (Pt) on a metal-oxide semiconductor such as tin oxide (SnO₂) as a catalyst and capable of detecting the concentration of a gas to be detected by utilizing the electrical characteristics (e.g., resistance) of the semiconductor that vary depending upon a variation of the gas to be detected. The gas-sensitive layer of such a gas sensor dispersedly supports the noble metal on the surface of the metal-oxide semiconductor by dipping, in its manufacturing process, the metal-oxide semiconductor powder in the solution containing a noble metal element as described in Unexamined Japanese Patent Publication No. 63-279150.

In the meantime, it is known that in case a gas-sensitive layer supporting a basic metal-oxide on a metal-oxide semiconductor as a catalyst is used, it exhibits a high gas sensitivity to various smells (particularly, bad smells) that are deemed to be caused by hydrogen sulfide and mercaptan and the like as described in Examined Japanese Patent Publication No. 6-27719. However, the basic metal-oxide has a high electrical resistance so that in case each semiconductor particle supports a basic metal-oxide as a catalyst as described in Unexamined Japanese Patent Publication No. 63-279150, the electrical resistance of a gas-sensitive layer itself becomes so high as to cause a difficulty in designing a circuit of a gas sensor. Thus, by sintering the gas-sensitive layer formed of a metal-oxide semiconductor powder and thereafter supporting a basic metal-oxide on the surface of a sintered body (gas-sensitive layer), increase of the electrical resistance of the gas-sensitive layer can be suppressed as disclosed in Examined Japanese Patent Publication No: 5-51096.

On the other hand, since such a gas-sensitive layer of the gas sensor is not reactive with a gas to be detected at ordinary temperatures but reactive when activated through heating up to, for example, 200°C to 400°C, it is a general practice to dispose a heating resistor inside a semiconductor substrate and the like on which the gas-sensitive layer is formed. However, in case the gas sensor is driven at a high temperature by using a heating resistor, there arises the possibility that separation will be caused at the interface between the gas-sensitive layer and the substrate due to a difference in thermal expansion therebetween. Thus, for attaining a high reliability, such a gas sensor is naturally required to increase the mechanical adhesion strength between the gas-sensitive layer and the substrate. Various proposals have been made to form an adhesive layer between the gas-sensitive layer and the substrate. For example, there have been proposed a thermal-type sensor in which a hafnium oxide layer is formed between a platinum (Pt) heater that is a thin-film resistor and its basis insulating film for thereby mitigating the thermal expansion as disclosed in Unexamined Japanese Patent Publication No. 2001-91486 and a gas sensor in which an electrode layer formed on a substrate is formed with undulations to increase its surface area and further a functionally gradient material that is electrically conductive and has a continuously varying material property is interposed between the electrode layer and the gas-sensitive layer as an intermediate layer for thereby mitigating the difference in the thermal expansion coefficient therebetween as disclosed in Unexamined Japanese Patent Publication No. 9-33470. Further prior art can be found in US 2006/0196248 A1.

### SUMMARY OF THE INVENTION

The thermal-type sensor proposed by Unexamined Japanese Patent Publication No. 2001-91486 is effective for increasing the adhesion strength between thin films having a large contact area but not effective for increasing the adhesion strength between the thick-film gas-sensing layer and the substrate since the contact area therebetween is small. Further, the gas sensor proposed by Unexamined Japanese Patent Publication No. 9-33470 can attain a necessary adhesion between the gas-sensitive layer and the substrate by forming undulations on the surface of the electrode layer and disposing a conductive intermediate layer on the electrode surface but there is a fear that a bad influence on the gas sensitivity might be caused by the intermediate layer that is different in the material property from the gas-sensitive layer and formed between the electrode layer and the gas-sensitive layer since a reaction of a gas to be detected occurs at the interface between a detecting electrode and the gas-sensitive layer.

It is accordingly an object of the present invention to provide a gas sensor adapted to prevent peeling off of the gas-sensitive layer from the substrate by using an adhesive layer and capable of detecting a variation of a gas concentration with accuracy without causing a bad influence on the gas sensitivity.

The present invention discloses a gas sensor according to claim 1 to achieve the above object.

According to a first aspect forming part of the present invention a gas sensor inter alia comprises a substrate, a gas-sensitive layer formed on the substrate and containing a metal-oxide semiconductor that varies in electrical characteristics depending upon a variation of a concentration of a particular gas in a gas to be detected, as a major constituent, an insulating adhesive layer provided on the substrate and in contact with the gas-sensitive layer, and detecting electrodes provided on the substrate for detecting a variation of the electrical characteristics of the gas-sensitive layer, wherein all of a surface of the detecting electrodes on the side facing the gas-sensitive layer is abuttingly engaged with the gas-sensitive layer.

According to a second aspect forming part of the present invention, a surface of the detecting electrodes on the side facing the substrate is abuttingly engaged with the substrate.

According to a third aspect not forming part of the present invention, there is provided a gas sensor wherein the detecting electrode is disposed between the adhesive layer and the gas-sensitive layer, and a surface of the detecting electrode on the side facing the adhesive layer is abuttingly engaged with the adhesive layer.

According to a fourth aspect not forming part of the present invention, there is provided a gas sensor comprising a substrate, a gas-sensitive layer formed on the substrate and containing a metal-oxide semiconductor that varies in electrical characteristics depending upon a variation of a concentration of a particular gas in a gas to be detected, as a major constituent, an insulating adhesive layer provided on the substrate and in contact with the gas-sensitive layer, and a detecting electrode provided on the substrate for detecting a variation of the electrical characteristics of the gas-sensitive layer, wherein the detecting electrode is disposed between the adhesive layer and the gas-sensitive layer, wherein a surface of the detecting electrode on the side facing the adhesive layer is abuttingly engaged with a first uneven surface of the adhesive layer on the side facing the detecting electrode and the gas-sensitive layer, and wherein a surface of the detecting electrode on the side facing the gas-sensitive layer includes a second uneven surface and is all abuttingly engaged with the gas-sensitive layer.

According to a fifth aspect forming part of the present invention, a projected area of a contact surface between the gas-sensitive layer and the adhesive layer onto the substrate is equal to or larger than 50% of a projected area of a contact surface of the gas-sensitive layer with the adhesive layer and the detecting electrodes onto the substrate.

According to a sixth aspect forming part of the present invention, the substrate includes a semiconductor base plate formed with an opening portion extending therethrough in the thickness direction, insulating layers formed on the semiconductor base plate and having a partition wall portion at a place corresponding to the opening portion, a heating resistor formed on the partition wall portion of the insulating layers, and a protective layer formed on the insulating layers so as to cover the heating resistor, and wherein the detecting electrodes, the adhesive layer and the gas-sensitive layer are formed on the protective layer of the substrate.

According to a seventh aspect forming part of the present invention a pair of the detecting electrodes is provided, and the adhesive layer is formed in the area between the pair of the detecting electrodes.

In the gas sensor having a gas-sensitive layer containing a metal-oxide semiconductor as a major constituent, a gas reaction occurring at the interface between the detecting electrode and the gas-sensitive layer has a relatively large influence on the gas detection so that it is desirable not to dispose a conductive material (in other words, a gas-active material) at the interface. On the other hand, if an adhesive layer made of an insulating material is formed on a substrate and a detecting electrode provided on the substrate, an electrical connection between the gas-sensitive layer and the detecting electrode cannot be attained. Thus, in the gas sensor according to the first aspect of the present invention, all the surface of the detecting electrode on the side facing the gas-sensitive layer is brought into abutting engagement with the gas-sensitive layer and the adhesive layer is formed of an insulating material that does not have an influence on electronic conduction of the gas-sensitive layer. By this, the adhesion between the substrate and the gas-sensitive layer can be increased effectively while making it possible to attain a good gas sensitivity toward a particular gas. Further, with the gas sensor according to the present invention, a concentration variation of a particular gas can be detected sufficiently even if current made to flow the gas-sensitive layer or voltage applied thereto is made smaller or lower, such a secondary effect that a circuit of a gas sensor can be designed with ease or can be manufactured at low cost is attained.

Further, by the gas sensor according to the second aspect of the invention, the detecting electrode is configured so as to abutingly engage both of the substrate and the gas-sensitive layer, so that the detecting electrodes are formed so as not to cover the adhesive layer but at the same level as the adhesive layer. By this, it becomes possible to decrease the adhesive layer-forming amount as compared with the case the detecting electrode is provided so as to cover the adhesive layer and the gas-sensitive layer is formed so as to contact the detecting electrode while attaining an effect according a first aspect of the present invention.

Further, by the gas sensor according to the third aspect of the present disclosure, the substrate side surface of the detecting electrode is abutingly engaged with the adhesive layer, thus making it possible to attain, in addition to the effect by the first aspect of the present invention, the adhesion between the detecting electrode and the substrate as well as the adhesion between the gas-sensitive layer and the substrate.

Further, by the gas sensor according to the fourth aspect of the present disclosure, the substrate side surface of the detecting electrode is abuttingly engaged with the adhesive layer, thus making it possible to attain the adhesion between the detecting electrode and the substrate as well as the adhesion between the gas detecting electrode and the substrate. The gas sensor is also configured so that the surface of the detecting electrode on the side facing the gas-sensitive layer is all abuttingly engaged with the gas-sensitive layer and the adhesive layer is formed of an insulating material that does not cause an influence on electronic conduction of the gas-sensitive layer. By this, it becomes possible to obtain an effect that cannot be realized by a prior art, i.e., to obtain a good gas sensitivity toward a particular gas while making higher the adhesion between the substrate and the gas-sensitive layer. Further, the detecting electrode has the second undulated surface on the side facing the gas-sensitive layer, and the gas-sensitive layer has on the side facing the detecting electrode the surface that is undulated so as to fit the undulations of the second undulated surface of the detecting electrode. For this reason, the surface area for abutting engagement between the detecting electrode and the gas-sensitive layer is increased as compared with the case the surface for such abutting engagement is flat, and therefore the adhesion between the detecting electrode and the gas-sensitive layer can be further improved by the anchor effect of the second undulated surface.

Further, the substrate side surface of the detecting electrode is undulated so as to fit the undulations of the first undulated surface of the adhesive layer. The detecting electrode is abuttingly engaged at that undulated surface with the first undulated surface of the adhesive layer, so that by the anchor effect of the first undulated surface the adhesion between the gas-sensitive layer and the substrate as well as the adhesion between the detecting electrode and the substrate can be assured. Further, since the gas sensor of this invention can detect a concentration variation of a particular gas sufficiently even if the current made to flow the gas-sensitive layer or the voltage applied thereto is made smaller, such a secondary effect that the circuit design for the gas sensor can be done with ease and at low cost is obtained.

Further, by the gas sensor according to the fifth aspect of the present invention, in addition to any one of the effects produced by the first to fourth aspects , the projected area (hereinafter referred to as "first projected area") of the contact surface between the gas-sensitive layer and the adhesive layer is equal to or larger than 50% of the projected area (hereinafter referred to as "second projected area") of the contact surface of the gas-sensitive layer with the adhesive layer and the detecting electrodes. The first projected area has a positive relationship with the contact area between the gas-sensitive layer and the adhesive layer, the actual measurement of which contact area is difficult. Similarly, the second projected area has a positive relationship with the contact area of the gas-sensitive layer with the adhesive layer and the detecting electrodes, the actual measurement of which contact area is difficult. Accordingly, by the structure described as above, the adhesion between the substrate and the gas-sensitive layer can be attained more assuredly. Further, by the structure that the first projected area is equal to or larger than 50% of the second projected area, the ratio of the projected area (hereinafter referred to as "third projected area") of the contact surface between the gas-sensitive layer and the detecting electrodes to the second projected area can be suppressed. The third projected area has a positive relationship with the contact area between the gas-sensitive layer and the detecting electrodes, the actual measurement of which contact area is difficult. Namely, according to the present invention, the contact area between the detecting electrodes that act as a catalyst and the gas-sensitive layer is suppressed. For this reason, the detecting electrodes are hard to detect a variation of the electrical characteristics of the gas-sensitive layer due to non-target gases other than a particular target gas in a gas mixture to be detected, thus making it possible to obtain such a secondary effect that a concentration variation of a particular gas can be detected satisfactorily. In the meantime, since the second projected area consists of the projected area of the contact surface between the gas-sensitive layer and the adhesive layer onto the substrate from the gas-sensitive layer side and the projected area of the contact surface between the gas-sensitive layer and the detecting electrodes onto the substrate from the gas-sensitive layer side, the first projected area and the third projected area make the second projected area.

By the gas sensor according to the sixth aspect of the present invention, in addition to any one of the effects produced by the first to fifth aspects, the gas-sensitive layer is formed on the protective layer so as to face the heating resistor. The heating resistor is formed so as to correspond in position to the opening formed in the semiconductor base plate and thus can heat and activate the gas-sensitive layer efficiently, thus enabling the gas-sensitive layer to detect a concentration variation of a particular gas satisfactorily.

### BRIEF DESCRIPTION OF THE DRAWINGS

FIG. 1 is a plan view of a gas sensor according to an embodiment of the present invention;
FIG. 2 is a sectional view taken along the line II-II in FIG. 1;
FIG. 3 is an enlarged plan view of a heating resistor of the gas sensor of FIG. 1;
FIG. 4 is a sectional view taken along the line IV-IV in FIG. 1;
FIG. 5 is an enlarged sectional view taken along the line V-V in FIG. 2;
FIG. 6 is a bar graph showing the result of evaluation 1;
FIG. 7 is a view similar to FIG. 2 but shows a first modified version not forming part of the invention;
FIG. 8 is a view similar to FIG. 2 but shows a second modified version not forming part of the invention;
FIG. 9 is an enlarged view of a portion 240 of FIG. 8;
FIG. 10 is a photograph of a second undulated surface 262 of a detecting electrode 260, which is taken by a scanning electron microscope immediately after the detecting electrode 260 is formed; and
FIG. 11 is a photograph of an abutting engagement surface between a detecting electrode 206 and a gas-sensitive layer 204, which is taken by a scanning electron microscope.

### DESCRIPTION OF THE PREFERRED EMBODIMENTS

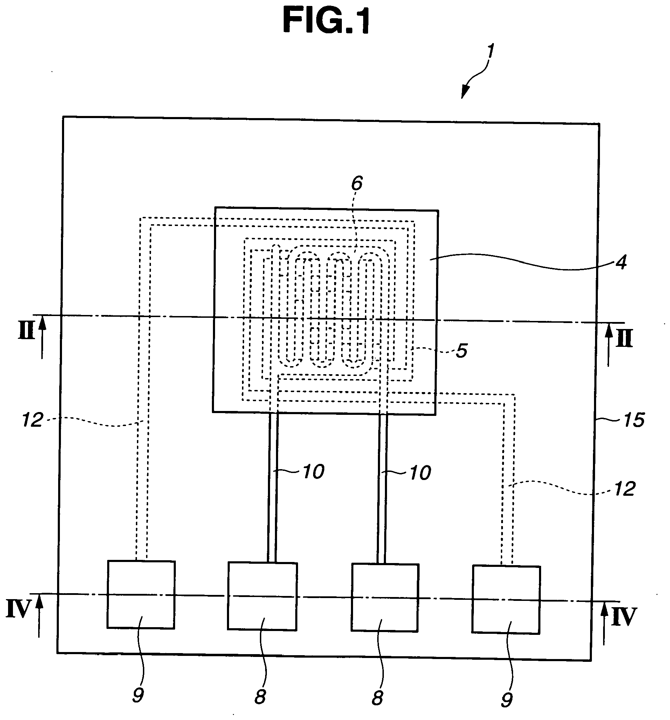

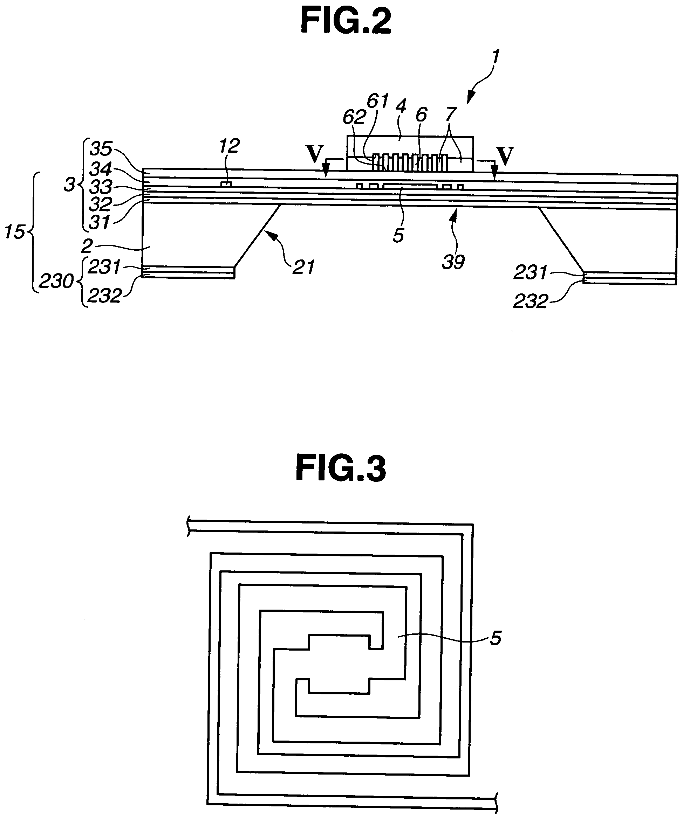

Referring to FIGS. 1 to 5, inclusive, a gas sensor according to an embodiment of the present invention will be described. In the meantime, the up and down direction in FIG. 2 is regarded as a vertical direction of the gas sensor, and the left and right direction in FIGS. 1 to 5 is regarded as the left and right direction of the sensor.

The gas sensor 1, as shown in FIG. 1, is rectangular, 2.6 mm long and 2 mm wide in a plan view and is configured, as shown in FIG. 2, so that an insulating layer 3 is formed on an upper surface of a silicon or semiconductor base plate 2 and a heating resistor 5 is buried inside the insulating layer 3 while an adhesive layer 7 and a gas-sensitive layer 4 are formed on the upper surface of the insulating layer 3. The gas-sensitive layer 4 has a property of varying in resistance value in response to a particular gas component in a gas mixture. In this connection, the gas sensor 1 is provided with the gas-sensitive layer 4 made of tin dioxide containing 0.2wt% of calcium oxide as a catalyst and adapted to detect a particular gas component such as ammonia (NH₃), hydrogen sulfide (H₂S), methyl disulfide ((CH₃)₂S₂), methyl mercaptan (CH₃SH) and trimethylamine ((CH₃)₃N). In the meantime, the term "detect" herein used is intended to encompass the detection of whether a particular gas component is present in a gas mixture to be detected as well as the detection of a concentration variation of a particular gas component. Further, the silicon base plate 2 corresponds to "semiconductor base plate" used to define the present invention, and an assembly of the silicon base plate 2, the insulating multilayer film 3 and the insulating multilayer film 230 corresponds to "substrate" used to define the present invention. Hereinafter, the structure of the gas sensor 1 will be described.

The silicon base plate 2 is generally in the form of a flat or planar plate, made of silicon and having a predetermined thickness. Further, as shown in FIG. 2, the silicon base plate 2 is partly removed so as to be formed with an opening portion 21 extending therethrough in the thickness direction. An insulating multilayer film 230 is also partly removed so that an insulating layer 31 is partly exposed to serve as a partition wall portion 39. Namely, in the gas sensor 1, the silicon base plate 2 having the opening portion 21, an insulating multilayer film 3 and an insulating multilayer film 230 constitute a substrate 15 having a diaphragm structure. The opening portion 21 is formed so as to correspond in position to a heating resistor 5 that is buried within insulating layers 33 and 34 when viewed in plan.

The insulating multiplayer film 3 is constituted by the above-described insulating layer 31, an insulating layer 32, the above-described insulating layers 33, 34 and a protective layer 35 that are formed on an upper surface of the silicon base plate 2. The insulating layer 31 formed on the silicon base plate 2 is a silicon oxide (SiO2) film having a predetermined thickness and partly exposed at the lower surface to the opening 21 of the silicon base plate 2. Further, the insulating layer 32 formed on the upper surface of the insulating layer 31 is a silicon nitride (Si₃N₄) film, and the insulating layer 33 formed on the upper surface of the insulating layer 32 is a silicon oxide (SiO₂) film. On the upper surface of the insulating layer 33 are formed the above-described heating resistor 5, lead portions 12 for supplying current to the heating resistor 5 and the insulating layer 34. The insulating layer 34 is a silicon oxide (SiO₂) film having a predetermined thickness. On the upper surface of the insulating layer 34 is formed the protective layer 35 formed of a silicon nitride (Si₃N₄) film having a predetermined thickness. The protective layer 35 is disposed so as to cover the heating layer 5 and the lead portions 12 for supplying current to the heating layer 5 for thereby protecting them from contamination and damage.

An insulating layer 231 formed on the lower surface of the silicon base plate 2 is a silicon oxide (SiO₂) film having a predetermined thickness, and an insulating layer 232 formed on the lower surface of the insulating layer 231 is a silicon nitride (Si₃N₄) film having a predetermined thickness. The insulating layers 231 and 232 formed on the lower surface of the silicon base plate 2 constitute the insulating multiplayer film 230.

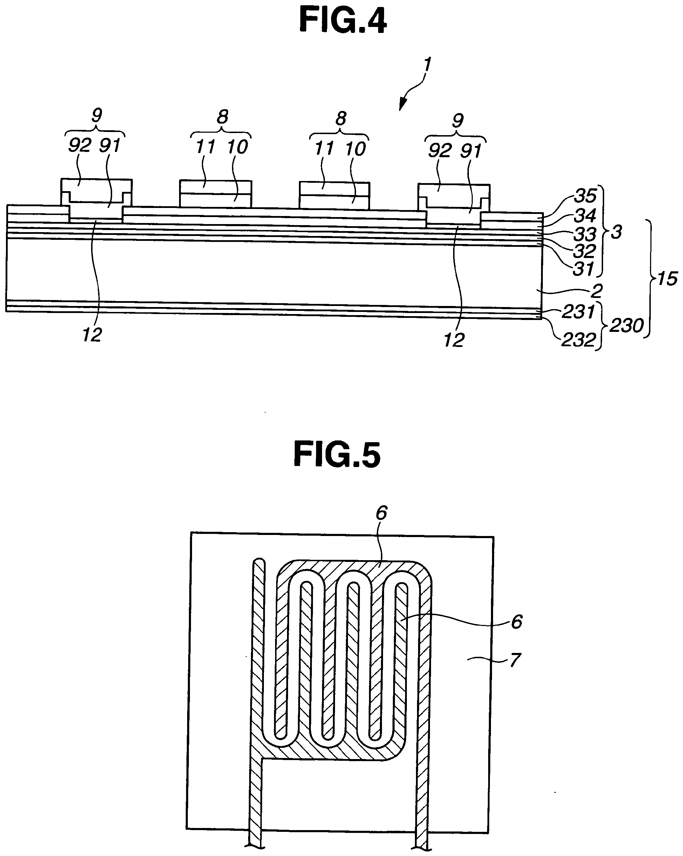

The heating resistor 5, as shown in FIGS. 2 and 3, is formed at a position corresponding to the upper part of the opening portion 21 of the silicon base plate 2 and between the insulating layers 33 and 34 and have a spiral shape when viewed in plan. Further, within the insulating layers 33 and 34 is buried the lead portions 12 that are connected to the heating resistor 5 for supplying current thereto. As shown in FIG. 4, at terminal ends of the lead portions 12 are formed heating resistor contacts 9 for connection with an external circuit. The heating resistor 5 and the lead portion 12 have a two-layer structure composed of a platinum (Pt) layer and a tantalum (Ta) layer. Further, the heating resistor contact 9 is structured so as to have an extraction electrode 91 composed of a platinum (Pt) layer and a tantalum layer and a contact pad 92 made of gold (Au) and formed on the surface of the extraction electrode 91. In the meantime, the gas sensor 1 is provided with two pairs of heating resistor contacts 9.

On the upper surface of the protective layer 35 are formed detecting electrodes 6 so as to positioned above the heating resistor 5 and lead portions 10 (refer to FIG. 4) for supplying current to the detecting electrodes 6, i.e., the detecting electrodes 6 and the lead portions 10 are formed on the same plane parallel to the silicon base plate 2. The detecting electrode 6 and the lead portion 10 are composed of a tantalum (Ta) layer formed on the protective layer 35 and a platinum (Pt) layer formed on the tantalum layer, similarly to the extraction electrode 91. Further, as shown in FIG. 4, at a leading end of each lead portion 10 and on the upper surface thereof is formed a contact pad 11 made of gold (Au) so as to constitute a metal-oxide semiconductor contact 8 for connection with an external circuit. In the meantime, the gas sensor 1 is provided with a pair of metal-oxide semiconductor contacts 8 as shown in FIGS. 1 and 4.

As shown in FIG. 5, each detecting electrode 6 is comb-shaped when viewed in plan, and a pair of detecting electrodes 6 are provided for detecting a variation of the electrical characteristics of the gas-sensitive layer 4. As shown in FIG. 2, the surface 61 of each detecting electrode 6 on the side facing the gas-sensitive layer 4 is all abuttingly engaged with the gas-sensitive layer 4 such that the gas-sensitive layer 4 and the detecting electrode 6 are electrically connected with each other. Since the gas-sensitive layer 4 is in contact with all the surface 61 of each detecting electrode 6 in this manner, gas reaction at the interface between the gas-sensitive layer 4 and each detecting electrode 6 is not hindered at all by any other members including the adhesive layer 7. Further, since the gas-sensitive layer 4 is heated by the heating resistor 5 so as to be activated rapidly and desirably, the gas sensitivity of the gas sensor 1 can be elevated in this respect. On the other hand, the surface 62 of each detecting electrode 6 on the side facing the protective layer 35 is abuttingly engaged with the protective layer 35. Further, around each detecting electrode 6 and at a place excluding the surface 61 of each detecting electrode 6 is provided the adhesive layer 7 that elevates the adhesion between the substrate 15 and the gas-sensitive layer 4 and prevents the gas-sensitive layer 4 from being peeled off from the substrate 15.

The adhesive layer 7 is provided for improving the adhesion between the substrate 15 and the gas-sensitive layer 4 and has a structure of a plurality of insulating metal oxide particles being condensed. For this reason, the surface of the adhesive layer 7 itself is ruggedly undulated so as to elevate the adhesion with the gas-sensitive layer 4 formed on the substrate 15 in a thick-film state by the anchor effect of the rugged undulated surface. In the meantime, the adhesive layer 7 can be obtained by, for example, applying sol solution in which insulating metal oxide particles are dispersed and firing the applied sol to be solidified.

The adhesive layer 7, as shown in the horizontal section of FIG. 5, is formed in the area between a pair of comb-shaped detecting electrodes 6 while being brought into contact with the peripheral portion of each electrode 6. On the other hand, as shown in the vertical section of FIG. 2, the adhesive layer 7 is not formed between each detecting electrode 6 and the gas-sensitive layer 4 but the surface 61 of each detecting electrode 6 on the side facing the gas-sensitive layer 4 is all abuttingly engaged with the gas-sensitive layer 4. By such a structure, the adhesive layer 7 does not have any influence on the gas reaction occurring at the interface between each detecting electrode 6 and the gas-sensitive layer 4 but improves the adhesion between the substrate 15 and the gas-sensitive layer 4. Further, since peeling of the gas-sensitive layer 4 starts, in many cases, at the outer edge of the gas-sensitive layer 4, the adhesive layer 7 in this embodiment is abuttingly engaged at the upper surface with the outer edge of the gas-sensitive layer 4 and thus can effectively prevent the outer edge of the gas-sensitive layer 4 from peeling off from the substrate 15.

Further, the adhesive layer 7 is made of insulating metal oxide such as alumina (Al₂O₃) and silica (SiO₂) so as not to cause any influence on the gas reaction at the interface between each detecting electrode 6 and the gas-sensitive layer 4. In the meantime, in order to improve the adhesion between each detecting electrode 6 and the gas-sensitive layer 4, it is preferable that the thickness of the adhesive layer 7 is smaller than that of each detecting electrode 6. Such a structure enables the adhesive layer 7 to be thinner and in addition, enables the surface 61 of each detecting electrode 6 on the side facing the gas-sensitive layer 4 to be assuredly exposed above the upper surface of the adhesive layer 7, thus making it possible for all the surface 61 to be abuttingly engaged with the gas-sensitive layer 4 assuredly.

### [Example 1]

The gas sensor 1 structured as described above is produced according to the following production process. In the meantime, an intermediate product of the gas sensor 1 in the middle of the production process is referred to as a substrate. Further, the number in the parentheses, which is fixed to the process step name for explanation thereof indicates the order according to which the process steps are to be executed. For example, "(1) Rinsing of Silicon Base Plate 2" indicates the process step that is to be executed first.

### (1) Rinsing of Silicon Base Plate 2

First, the silicon base plate 2 was immersed in a rinsing liquid and subjected to a rinsing treatment.

### (2) Formation of Insulating Layers 31 and 231

The silicon base plate 2 was put into a heat treatment furnace and subjected to a thermal-oxidation treatment to form the insulating layers 31 and 231 each composed of an silicon oxide (Si₂O₃) film having a thickness of 100 nm on the opposite surfaces (upper surface and lower surface) of the silicon base plate 2, respectively.

### (3) Formation of Insulating Layers 32 and 232

Then, by LP-CVD using dichlorosilane (SiH₂Cl₂) and ammonia (NH₃) as a source gas, the insulating layers 32, 232 each composed of a silicon nitride (Si₃N₄) film having a thickness of 200 nm were formed on the surfaces of the insulating layers 31 and 231, respectively.

### (4) Formation of Insulating Layer 33

Then, by plasma CVD using tetraethoxysilane (TEOS) and oxygen (O₂) as a source gas, the insulating layer 33 composed of a silicon oxide (SiO₂) film having a thickness of 100 nm was formed on the surface of the insulating layer 32.

### (5) Formation of Heating Resistor 5 and Lead Portions 12

Then, by a DC sputtering apparatus, a tantalum (Ta) layer having a thickness of 20 nm was formed on the surface of the insulating layer 33, and a platinum (Pt) layer having a thickness of 220 nm was formed on the tantalum layer. After sputtering, a resist was patterned by a photolithography, and patterns of the heating resistor 5 and the lead portions 12 were formed by a wet-etching treatment.

### (6) Formation of Insulating Layer 34

Then, similarly to the process step (4), by plasma CVD using tetraethoxysilane (TEOS) and oxygen (O₂) as a source gas, the insulating layer 34 composed of a silicon oxide (SO₂) film having a thickness of 100 nm was formed on the surfaces of the heating resistor 5 and the lead portions 12. The heating resistor 5 and the lead portions 12 were buried in this manner within the insulating layer 34 having the thickness of 100 nm.

### (7) Formation of Protective Layer 35

Further, similarly to the process step (3), by LP-CVD using dichlorosilane (SiH₂Cl₂) and ammonia (NH₃) as a source gas, the protective layer 35 composed of a silicon nitride (Si₃N₄) film having a thickness of 200 nm was formed on the upper surface of the insulating layer 34.

### (8) Formation of Openings for Heating Resistor Contacts 9

Then, the resist was patterned by the photolithography, and the protective layer 35 and the insulating layer 34 were etched by a dry etching method to form openings at portions where the heating resistor contacts 9 were to be formed and thereby make the terminal ends of the lead portions 12 be partly exposed. (9) Formation of Detecting Electrodes 6, Lead Portions 10 and Extraction Electrodes 91

Then, by a DC sputtering apparatus, a tantalum (Ta) layer having a thickness of 20 nm was formed on the surface of the protective layer 35, and a platinum (Pt) layer having a thickness of 40 nm was formed on the surface of the tantalum layer. After sputtering, the resist was patterned by a photolithography, and the patterns of the comb-shaped detecting electrodes 6, lead portions 10 and extraction electrodes 91 were formed by a wet-etching treatment.

### (10) Formation of Adhesive Layer 7

On the protective layer 35 and between and around the comb-shaped detecting electrodes 6 was formed a sol solution layer that was formed into the adhesive layer 7 after firing. In the meantime, the sol solution layer was formed by regulating the sol solution containing alumina particles of the particle size in the range from 10 nm to 20 nm so as to have a predetermined viscosity, applying the sol solution onto the protective layer 35 by the inkjet method and then drying it.

### (11) Formation of Contact Pads 11 and 92

Then, by the DC sputtering apparatus, a gold (Au) layer having a thickness of 400 nm was formed on the surface of the substrate where the electrodes were formed. After sputtering, the resist was patterned by the photolithography, and the contact pads 11 and 92 were formed by wet-etching treatment.

### (12) Formation of Opening Portion 21

Then, the resist was patterned by the photolithography, and an insulating film used as a mask was formed by dry etching treatment. Then, the silicon base plate 2 was immersed in tetramethyl ammonium hydroxide (TMAH) solution and subjected to anisotropic etching to form the opening portion 21 in a way as to expose the portion of the insulating layer 31 that corresponds in position to the heating resistor 5 and that serves as the partition wall portion 39.

### (13) Formation of Gas-sensitive Layer 4

Further, oxide semiconductor paste containing tin oxide as a major constituent and added with calcium oxide was applied by thick film printing on the surfaces of the sol solution layer and each detecting electrode 6 to form a paste layer having a thickness of 30 *µ*m. In the meantime, the oxide semiconductor paste was prepared by the following process. First, stannous chloride (SnCl₂) was added to pure water and stirred sufficiently followed by dropwise addition of ammonia water to precipitate tin hydroxide. Thereafter, precipitated powder was washed with pure water several times to remove ammonium ion and chlorine ion and dried. After drying, the precipitated powder and calcium hydroxide (Ca(OH)₂) were dispersed in pure water and stirred sufficiently and thereafter dried. In this instance, calcium hydroxide was added in the amount of 0.2 % by weight when calculated in terms of calcium oxide (CaO). After drying, the precipitated powder added with calcium hydroxide was fired at 800 °C for five hours, and the thus obtained powder of an amount of 5g was ground by a grinding mill for an hour. Thereafter, the powder was added with an organic solvent and grounded by a grinding mill (may be pot mill) for four hours. Then, the thus grounded powder was added with a binder and viscosity adjusting agent and further grounded for four hours to form a paste of a viscosity of 140 Pa·s at 25 °C.

### (14) Firing of Substrate

The substrate was inserted into a heat treatment furnace and subjected to firing at 650 °C for one hour to obtain the substrate formed with the adhesive layer 7 and the gas-sensitive layer 4.

### (15) Cutting of Substrate

The substrate was cut using a dicing saw to obtain a gas sensor 1 having the size of 2.6 mm x 2 mm when viewed in plan.

Then, in order to recognize the effect of the present invention resulting from the production of the gas sensor according to the above-described production process, the following two kinds of evaluation and inspection were executed.

### [Evaluation 1]

An example of the gas sensor 1 whose adhesive layer 7 was made of insulating alumina (Al₂O₃) and a comparative example having the same structure as the gas sensor 1 except for the material of the adhesive layer 7 were prepared and evaluated with respect to the sensitivity toward a particular gas component. The adhesive layer of the comparative example was made of tin oxide (SnO₂) that was oxide semiconductor serving as the major constituent of the gas-sensitive layer 4 and did not contain calcium oxide serving as a catalyst.

The evaluation test was performed in the following order. First, using a mixed gas of a temperature of 25 °C and a relative humidity of 40% RH and with a composition of 20.9 vol% of oxygen (O₂) and the remainder of nitrogen (N₂), as a base gas, the base gas resistance (Rair) of each gas sensor in the atmosphere of the base gas was measured. The temperature of the heating resistor 5 at the time of the measurement was regulated to 350 °C. After measurement of the base gas resistance, 5 ppm of ammonia (NH₃) that served as a particular gas to be detected was mixed with the base gas and five seconds after the mixing the electrical resistance value (Rgas) of each gas sensor was measured. The ratio (Rgas/Rair) between the base gas resistance value and the electrical resistance value was calculated and determined as the gas sensitivity.

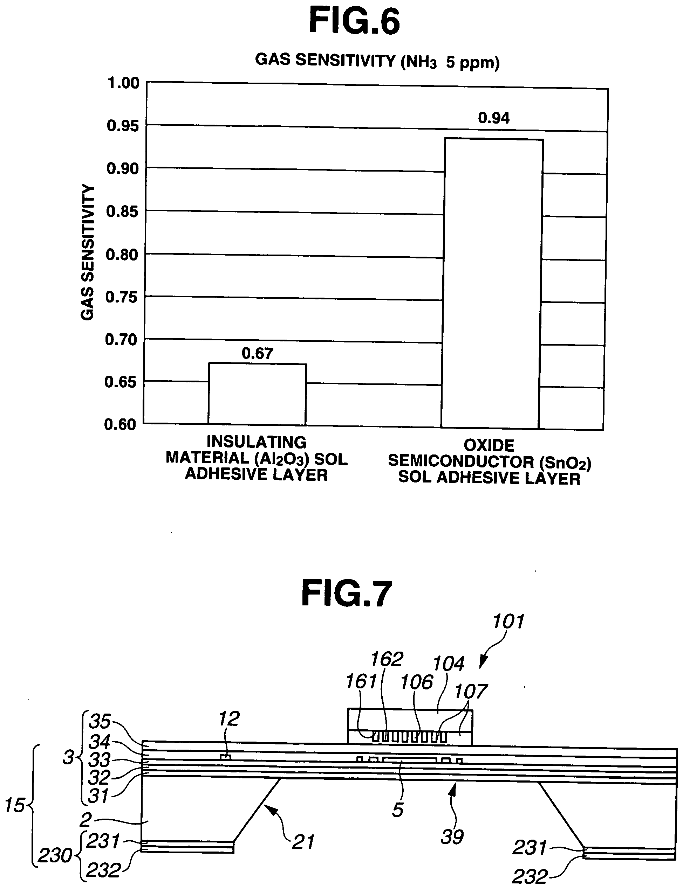

The result of the evaluation 1 is shown in the graph of FIG. 6. From the graph, it is seen that both examples have a gas sensitivity less than 0.95, which means that both examples do not cause any problem in actual use. However, since the gas sensitivity of the gas sensor 1 according to the example of this embodiment is 0.67 whereas the gas sensitivity of the comparative example is 0.94, it is recognized that the gas sensor 1 of this embodiment exhibits a far excellent sensitivity as compared with the comparative example. From this, it is suggested that the material of the adhesive layer causes a relative large influence on the reaction at the interface between the detecting electrode and the gas-sensitive layer since the example of this embodiment in which the adhesive layer was made of insulating metal oxide had a better gas sensitivity than that of the comparative example in which the adhesive layer was made of the material operable to react with a particular gas component contained in the gas to be detected.

### [Evaluation 2]

Then, the sensitivity characteristics of the example 1 with respect to non-target gas components other than the particular target gas component was evaluated. The evaluation was performed in the following order. First, similarly to the above-described evaluation 1, the base gas resistance (Rair) in the base gas atmosphere was measured. Then, after the measurement of the base gas resistance, not ammonia used as the particular gas component but 1ppm of nitrogen dioxide (NO₂) was mixed with the base gas as a non-target gas component and 10 seconds after the mixing the electrical resistance (Rgas') of the gas sensor 1 was measured. Then, the ratio (Rgas'/Rair) between the base gas resistance and the measured electrical resistance was calculated and determined as the non-target gas characteristics. The non-target gas characteristics serve as an indicator for indicating that the accuracy in detection of a concentration variation of a particular gas component reduces with increase of the ratio (Rgas'/Rair). It is generally considered preferable from the point of view of actual use of the gas sensor that the non-target gas characteristics is 1.9 or less and more preferable 1.5 or less.

By the various experiments having been made by the inventors, it was newly confirmed that a low rate of contact area between each detecting electrode 6 operating as a catalyst and the gas-sensitive layer 4 was effective for suppressing the non-target gas characteristics. More specifically, it was suggested by the experiments that it was effective for suppression of the non-target gas characteristics to hold small the rate of contact area between the gas-sensitive layer and the detecting electrode while securing the first projection area that is 50% or more of the second projection area. For example, in case the gas sensor 1 was produced so that the first projection area was 150,000 *µ*m², the second projection area was 250,000 *µ*m² and therefore the first projection area was 60% of the second projection area, the non-target gas characteristics was 1.33. Since the ratio of 1.33 indicative of the non-target gas characteristics was smaller than 1.5 that was considered particularly desirable in practical use, it could be confirmed that the non-target gas characteristics were suppressed satisfactorily. In the meantime, the upper limit of the ratio of the first projection area to the second projection area is set at a value less than 100% on the basis of whether the minimum concentration variation of a particular gas, which is to be detected by the gas sensor is measurable.

In this connection, for securing the first projection area that is 50% or more of the second projection area, it will suffice to determine the conditions in the above-described production process of the gas sensor 1 as follows. Hereinafter, by taking the case the first projection area is 60% or more of the second projection area in evaluation (2) as an example, the conditions for the production process will be described. In "(9) Formation of Detecting Electrodes 6, Lead Portions 10 and Extraction Electrodes 91", each detecting electrode 6 was formed so that the projection area (third projection area) obtained by projecting the pair of detecting electrodes 6 onto the substrate from the gas-sensitive layer 4 side was 100,00 *µ*m². Further, in "(10) Formation of Adhesive Layer 7", the adhesive layer 7 was formed so that the projection area of only the adhesive layer 7 in case the adhesive layer 7 included within the area of the gas-sensitive layer 4 when viewed in plan is projected onto the substrate together with the electrodes 6 is 150,000 *µ*m². Further, in "(13) Formation of Gas-sensitive Layer 4", the gas-sensitive layer 4 is formed so that the projection area (second projection area) of the contact surface at which the gas-sensitive layer 4 is brought into contact with the adhesive layer 7 and the detecting electrodes 6, onto the substrate from the gas-sensitive layer 4 side, is 250,000 *µ*m². By this, in evaluation (2), the gas sensor 1 is structured so that the first projection surface is 50% or more of the second projection surface (150,000 *µ*m²/250,000 *µ*m² x 100=60%).

As having been described in detail as above, in the gas sensor 1 of this embodiment, the adhesive layer 7 made of an insulating material that does not cause any influence on the electronic transmission of the gas-sensitive layer 4 is formed between the substrate 15 and the gas-sensitive layer 4, while securing a contact area between the detecting electrode 6 and the gas-sensitive layer 4 by abuttingly engaging all the surface 61 of the detecting electrode 6 on the side facing the gas-sensitive layer 4. Accordingly, by the gas sensor of this embodiment, it becomes possible to obtain a good gas sensitivity while improving the adhesion between the substrate 15 and the gas-sensitive layer 4, i.e., an effect that cannot be attained by the prior art. Further, since a concentration variation of a particular gas component can be detected sufficiently even if current or voltage applied to the gas-sensitive layer 4 is made smaller, such a secondary effect that design of the gas sensor circuit can be obtained with ease and at low cost. Further, the heating resistor 5 is formed at the place corresponding to the opening portion 21 formed in the silicon base plate 2, it becomes possible to heat and activate the gas-sensitive layer 4 efficiently and detect a concentration variation of a particular gas component in a gas mixture to be detected satisfactorily.

In the meantime, the invention is not limited to the embodiment described above and various changes can be made thereto without departing from the scope of the invention as defined by claim 1. For example, although the silicon base plate 2 constituting part of the substrate 15 is made of silicon, it can be made of alumina (Al₂O3) or a semiconductor material. Further, the plane figure of the produced gas sensor 1 is not limited to a rectangle but can be a polygon or circle, and the gas sensor 1 is not limited in the size, thickness and arrangement of constituent parts thereof to those of the embodiment described above.

Further, the production method of the gas sensor 1 is not limited to example 1 but various changes can be made thereto. For example, while in "(10) Formation of Adhesive Layer 7" of the first embodiment the sol solution layer to be formed into the adhesive layer 7 is formed by an inkjet method, it can be formed by another method such as a dip coating method, electrophoresis method, liquid layer transport method, mist method, screen printing method and spin coating method. Further, while the adhesive layer 7 has been described so as to be formed after formation of the detecting electrode 6, lead portions 10 and extraction electrodes 91, it can be formed before their formation.

In such a case, the sol solution layer to be formed into the adhesive layer 7 is, for example, formed on the protective layer 35, thereafter the portions of the sol solution layer at which the detecting electrode 6, lead portions 10 and extraction electrodes 91 are to be formed are removed by etching or the like, and then at the portions from which the sol solution layer is thus removed are formed the detecting electrode 6, lead portions 10 and extraction electrodes 91.

Further, while in the above-described embodiment the adhesive layer 7 is constructed so as to have a smaller thickness than the gas-sensitive layer 4, this is not for the purpose of limitation but it will suffice that all the surface 61 of the detecting electrode 6 on the side facing the gas-sensitive layer 4 is abuttingly engaged with the gas-sensitive layer 4. In the above-described embodiment the adhesive layer 7 is constructed in two areas, i.e., in the area between a pair of the comb-shaped detecting electrodes 6 and in the area around the periphery of the detecting electrodes 6 to secure the adhesion between the gas-sensitive layer 4 and the substrate 15.

Further, while in the above-described embodiment the rated contact area between the gas-sensitive layer 4 and the detecting electrodes 6 is suppressed by securing the first projection area so as to be 50% or more of the second projection area, this is not limitative. The ratio of the first projection area to the second projection area can be set suitably in accordance with the gas sensitivity, non-target gas characteristics and the like.

Further, while the insulation layer 3 is made of silicon oxide and silicon nitride so as to have a multilayered structure, it can be made of silicon oxide or silicon nitride so as to have a single layered structure. Further, while in this embodiment the heating resistor 5 is buried within the insulation layers 33 and 34, this is not limitative. For example, the heating resistor 5 can be buried only within the insulation layer 32.

Further, while tin oxide that is a metal-oxide semiconductor is used for a major constituent of the gas-sensitive layer 4, other metal-oxide semiconductors such as zinc oxide (ZnO), nickel oxide (NiO), titanium oxide (TiO₂) and vanadium oxide (VO₂) can be used in place thereof. Further, as the basic metal-oxide to be added to the metal-oxide semiconductor can be used alkaline earth metal oxides such as calcium (Ca), magnesium (Mg), strontium (Sr), barium (Ba) and beryllium (Be), alkali metal oxides such as sodium (Na), potassium (K), rubidium (Rb) and cesium (Cs), and rare earth oxides such as scandium (Sc), yttrium (Y) and other lanthanoids elements.

In the meantime, the above-described embodiment is structured so that the surface of the detecting electrodes 6 on the side facing the substrate 15 is abuttingly engaged with the protective layer 35. This structure has an advantage of improving the adhesion between the substrate 15 and the detecting electrodes 6 while reducing the amount of formation of the adhesive layer 7, whereas it may cause such a case, when the contact area between the substrate 15 and the detecting electrodes 6 is large, the adhesion between the substrate 15 and the detecting electrodes 6 cannot be improved. Thus, the adhesive layer may be structured as a first modified version not forming part of the invention as shown in FIG. 7. Hereinafter, with reference to FIG. 7, a gas sensor 101 wherein the adhesive layer 7 is formed on the lower surface of the detecting electrode 6 according to the first modified version will be described. In the meantime, since the structure of the gas sensor 101 is similar to that of the above-described embodiment except for the adhesive layer, description of similar portions thereof is omitted for brevity. Further, the up and down direction and the left and right direction in FIG. 7 are regarded as a vertical direction and a left and right direction of the sensor 101, respectively.

As shown in FIG. 7, in the gas sensor 101 according to the first modified version, all the surface 161 of the detecting electrodes 106 on the side facing the gas-sensitive layer 104 is abuttingly engaged with the gas-sensitive layer 104. On the other hand, the surface 162 of the detecting electrode 106 on the side facing the substrate 15, i.e., the surface 162 facing the adhesive layer 107 is abuttingly engaged with the adhesive layer 107. By this structure, the adhesion between the detecting electrode 106 and the protective layer 35 is improved. Further, since in the first modified version the contact surface area between the protective layer 35 constituting part of the substrate 15 and the adhesive layer 107 is increased, the adhesive layer 107 and the protective layer 35 are adhered more assuredly. Accordingly, even when, for example, the contact surface area between the substrate 15 and the detecting electrode 106 is large, the adhesion between the substrate 15 and the detecting electrode 6 can be improved and peeling off of the gas-sensitive layer 104 from the substrate 15 can be prevented.

Then, the production method of the first modified version will be described as an example 2. The production method of the first modified version differs from the above-described example 1 in "(9) Formation of Detecting Electrode 6, Lead Portions 10 and Extraction Electrodes 91" and "(10) Formation of Adhesive Layer 7". Description of similar process steps to those of the example 1 is omitted and description of only the process steps different from the example 1 will be made hereinafter.

### [Example 2]

### (9) Formation of Adhesive Layer 107

A sol solution layer to be formed into the adhesive layer 107 after firing was formed on the upper surface of the protective layer at a position corresponding to the heating resistor 5 and the opening portion 21 by a spin coating method and dried. Thereafter, the sol solution layer was partly removed by etching to form recessed portions at positions at which the detecting electrodes 106 were to be formed. (10) Formation of Detecting Electrode 106, Lead Portions 10 and Extraction Electrodes 91

Then, by using a DC sputtering apparatus, a tantalum layer of the thickness of 20 nm was formed in the recessed portions that are formed by partly removing the adhesive layer 107 by etching and on the surface of the protective layer 35, and a platinum layer of the thickness of 40 nm was further formed on the surface of the tantalum layer. After sputtering, the resist was patterned by a photolithography, and the patterns of the comb-shaped detecting electrodes 106, lead portions 10 and extraction electrodes 91 were formed by a wet-etching treatment.

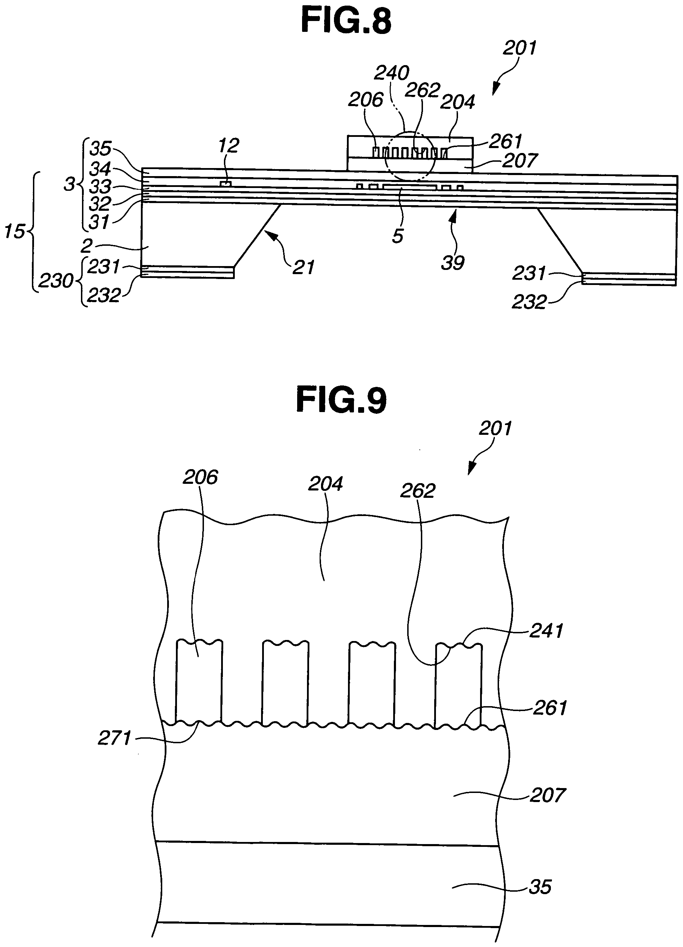

In the meantime, in the above-described embodiment and the first modified version, the detecting electrode and the gas-sensitive layer are directly engaged with each other. In case the contact surface area between the gas-sensitive layer and the detecting electrode is large, and the like, there may occur such a case where the adhesion between the substrate and the detecting electrode is not improved. Thus, as in a second modified version not forming part of the invention, the gas sensor may be structured so that the detecting electrode is formed between the adhesive layer and the gas-sensitive layer, and the adhesive layer has on the side facing the detecting electrode and the gas-sensitive layer a first undulated surface while the detecting electrode has on the side facing the gas-sensitive layer a second undulated surface. Hereinafter, a gas sensor 201 according to the second modified version will be described with reference to FIGS. 8 and 9. In the meantime, the up and down direction and left and right direction in FIGS. 8 and 9 are regarded as a vertical direction and a left and right direction of the gas sensor 201, respectively.

In FIGS. 8 and 9, the structure of the gas sensor 201 according to the second modified version is similar to that of the above-described examples except for the structures of the adhesive layer 207, the detecting electrode 206 and the gas-sensitive layer 204. Accordingly, description of a similar structure to that of the above-described embodiment is omitted and description of only the structures of the adhesive layer 207, the detecting electrode 206 and the gas-sensitive layer 204 that differ from the above-described version will be described hereinafter.

As shown in FIGS. 8 and 9, the adhesive layer 207 of the gas sensor 201 according to the second modified version has on the side facing the gas-sensitive layer 204 and the detecting electrode 206 a first ruggedly undulated surface 271. The adhesive layer 207 serves as a layer for improving the adhesion between the substrate 15 and the gas-sensitive layer 204 and has a structure of a plurality of insulating metal oxide particles being condensed. In the second modified version, since the surface of the adhesive layer 207 is ruggedly undulated, the adhesive layer 207 effectively elevates the adhesion with the gas-sensitive layer 204 formed on the substrate 15 in a thick-film state by the anchor effect of the above-described first undulated surface 271. In the meantime, the adhesive layer 207 can be obtained by, for example, applying sol solution in which insulating metal oxide particles are dispersed and firing the applied sol to be solidified.

The detecting electrode 206 has on the substrate 15 side, i.e., on the side facing the adhesive layer 207 a ruggedly undulated surface 261 with undulations fittingly engageable in the undulations of the first undulated surface 271 of the adhesive layer 207 and abuttingly engaged at the undulated surface 261 with the first undulated surface 271 of the adhesive layer 207. Since in such a second modified version the surface area for abutting engagement of the adhesive layer 207 with the gas-sensitive layer 204 constituting part of the substrate 15 and the detecting electrode 206 is increased as compared with the above-described versions, the adhesive layer 207 is adhered with the gas-sensitive layer 204 and the detecting electrode 206 more assuredly. Accordingly, even in case, for example, the contact surface area between the substrate 15 and the detecting electrode 206 is large, an assured adhesion between the substrate 15 and the detecting electrode 206 can be attained and peeling off of the gas-sensitive layer 204 from the substrate 15 can be prevented.

Further, the detecting electrode 206 has on the side facing the gas-sensitive layer 204 a second ruggedly undulated surface 262. On the other hand, the surface 241 of the gas-sensitive layer 204 for abutting engagement with the detecting electrode 206 is ruggedly undulated to have undulations fittingly engageable in the undulations of the second undulated surface 262 of the detecting electrode 206. Further, the detecting electrode 206 is abuttingly engaged at all the gas-sensitive layer 204 side surface, i.e., at the second undulated surface 262 with the surface 241 of the gas-sensitive layer 204. For this reason, the contact surface area between the detecting electrode 206 and the gas-sensitive layer 204 is increased as compared with that in case the surface of the detecting electrode 206 on the side facing the gas-sensitive layer 204 is flat, thus making it possible to improve the adhesion between the detecting electrode 206 and the gas-sensitive layer 204 by the anchor effect of the second undulated surface 262. Accordingly, even in case, for example, the contact surface area between the gas-sensitive layer 204 and the detecting electrode 206 is large, peeling off of the gas-sensitive layer 204 from the substrate 15 can be prevented assuredly. In the meantime, the detecting electrode 206 having the second undulated surface 262 can be obtained by, for example, sputtering a conductive metal layer on the surface of the adhesive layer 207 having the first undulated surface 271. Further, the second undulated surface can be formed by applying, after the detecting electrode is formed, to the surface of the detecting electrode on the side facing the gas-sensitive layer a mechanical surface treatment for forming undulations.

Then, a production method for the gas sensor 201 according to the second modified version will be described as an example 3. The production method for the gas sensor 201 according to the variant 2 is substantially similar in the details and the order of the process steps to the above-described example 1 except for "(8) Formation of Openings for Heating Resistor Contacts 9", "(9) Formation of Detecting Electrode 6, Lead Portions 10 and Extraction Electrodes 91", "(10) Formation of Adhesion Layer 7" and "(13) Formation of Gas-sensitive Layer 4". Thus, description of the similar steps to those of the example 1 is omitted for brevity and description of the steps different from those of the example 1 will be made.

### [Example 3]

### (8) Formation of Adhesive Layer 207

An aluminum film having a predetermined thickness and undulations on the surface thereof is formed by sputtering on the upper surface of the protective layer 35 and at a position corresponding to the heating resistor 5 and the opening portion 21 and formed into an aluminum oxide film by oxidation. By this step, the adhesive layer 207 whose surface is ruggedly undulated is formed.

### (9) Formation of Openings for Heating Resistor Contacts 9

Then, the resist was patterned by the photolithography, and the protective layer 35 formed with the adhesive layer 207 on the upper surface thereof and the insulating layer 34 were etched by a dry etching method to form openings at positions where the heating resistor contacts 9 were to be formed and thereby partly expose the terminal ends of the lead portions 12 to the outside.

### (10) Formation of Detecting Electrode 206, Lead Portions 10 and Extraction Electrodes 91

Then, by using a DC sputtering apparatus, a tantalum layer of the thickness of 20 nm is formed on the surfaces of the adhesive layer 207 and the protective layer 35, and a platinum layer of the thickness of 40 nm is further formed on the surface of the tantalum layer. After sputtering, the resist was patterned by a photolithography, and the patterns of the comb-shaped detecting electrodes 206, lead portions 10 and extraction electrodes 91 were formed by a wet-etching treatment. By this process, from the cause of the undulated surface of the adhesive layer 207 that is formed at the step "(8) Formation of Adhesive Layer 207", the detecting electrode 206 is formed with undulations at the upper surface thereof, i.e., the second undulated surface 262.

### (13) Formation of Gas-sensitive Layer 204

Further, oxide semiconductor paste containing tin oxide as a major constituent and added with calcium oxide was applied by thick film printing on the surfaces of the detecting electrode 206 and the adhesive layer 207 to form a paste layer having a thickness of 30 *µ*m. In this instance, the surface 241 of the gas-sensitive layer 204 for abutting engagement with the detecting electrode 206 was formed with undulations fittingly engaged in the undulations of the second undulated surface 262 of the detecting electrode 262 which were formed in the step "(10) Formation of Detecting electrode 206, Lead Portion 10 and Extraction Electrode 91". In the meantime, the oxide semiconductor paste was prepared by the same process as that of the Example 1.

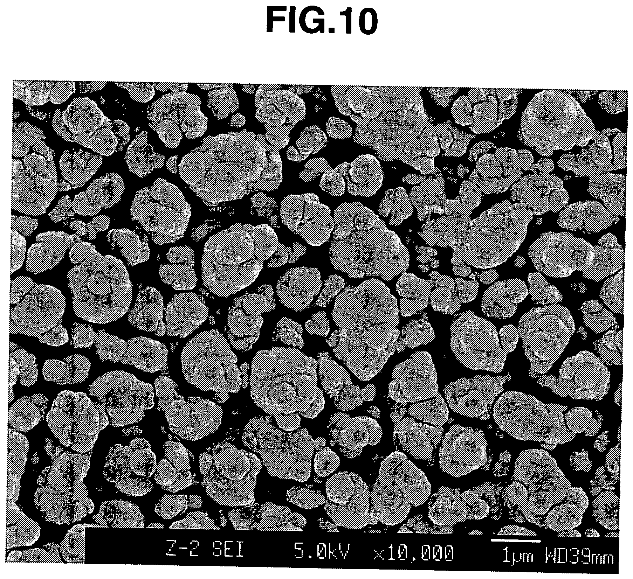

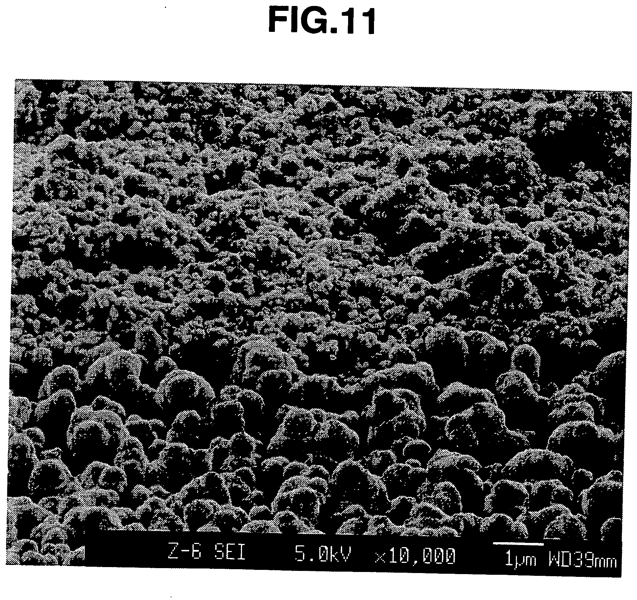

Then, for inspection of the structure of the gas sensor 201 produced according to the above-described production process, the second undulated surface 262 of the detecting electrode 206 and the abutting surface between the second undulated surface 262 and the surface 242 of the gas-sensitive layer 204 was confirmed by being magnified 10,000 times using a scanning electron microscope. FIG. 10 is a photograph of the detecting electrode 206 immediately after formation thereof (before formation of the gas-sensitive layer 204) that is magnified 10,000 times by using a scanning electron microscope. As shown in FIG. 10, it was confirmed that the gas-sensitive layer 204 side surface of the detecting electrode 206 that was formed in accordance with the above-described production process was provided with the second undulated surface 262 that was formed by condensation of a plurality of metal particles. The second undulated surface formed from the cause of the undulated surface of the adhesive layer 207 that was formed at the step "(8) Formation of Adhesive Layer 207". On the other hand, FIG. 11 is a magnified photograph of the abutting engagement surface between the detecting electrode 206 and the gas-sensitive layer 204 using a scanning electron microscope. In the photograph of FIG. 11, the layer consisting of relatively large particles and located in the lower part of the photo is the detecting electrode 206, and the layer consisting of relative small particles and located in the upper part of the photo is the gas-sensitive layer 204. It was confirmed that the surface 241 of the gas-sensitive layer 204 on the side for abutting engagement with the detecting electrode 206 was formed into an undulated surface fittingly engaged in the undulations of the second undulated surface 262 of the detecting electrode 206. From FIGS. 10 and 11, it was confirmed that the contact surface area between the detecting electrode 206 and the gas-sensitive layer 204 in the gas sensor 201 according the second modified version was increased as compared with the case where the surface of the detecting electrode 206 on the side facing the gas-sensitive layer 204 was flat.

In the meantime, while in the above-described second modified version the step "(2) Formation of Insulating Layers 31, 231" is performed to form the insulating layers 31, 231, the step can be omitted and insulating layers 32, 232 composed of silicon nitride (Si₃N₄) film can be formed on the opposite sides of the silicon base plate 2, respectively. Further, the order of the production process steps can be changed according to the necessity, for example, the step "(9) Formation of Openings of Heating Resistor Contacts 9" can be performed after the step "(10) Formation of Detecting electrode 206, Lead Portions 10 and Extraction Electrodes 91".

## Claims

1. A gas sensor (1) comprising:
a substrate (15) including
(a) a semiconductor base plate (2) formed with an opening portion (21) extending therethrough in the thickness direction,
(b) insulating layers (31, 32, 33, 34) formed on the semiconductor base plate (2) and having a partition wall portion (39) at a place corresponding to the opening portion (21),
(c) a heating resistor (5) formed on the partition wall portion (39) of the insulating layers (31, 32, 33, 34) and
(d) a protective layer (35) formed on the insulating layers (31, 32, 33, 34) so as to cover the heating resistor (5),
a gas-sensitive layer (4) formed on the substrate (15) and containing a metal-oxide semiconductor that varies in electrical characteristics depending upon a variation of a concentration of a particular gas component in a gas mixture to be detected, as a major constituent,
a pair of detecting electrodes (6) for detecting a variation of the electrical characteristics of the gas-sensitive layer (4),
wherein the detecting electrodes (6) and the gas-sensitive layer (4) are formed on the protective layer (35) of the substrate (15), and
the detecting electrodes (6) are abuttingly engaged with the protective layer (35), and wherein all of a surface of the detecting electrodes (6) on the side facing the gas-sensitive layer (4) is abuttingly engaged with the gas-sensitive layer (4),
**characterized in that**
the detecting electrodes (6) are comb-shaped when viewed in plan, and an insulating adhesive layer (7) is provided on the substrate (15), formed on the protective layer (35) of the substrate (15), and is in contact with the gas-sensitive layer (4), for improving the adhesion between the substrate (15) and the gas-sensitive layer (4), and the adhesive layer (7) is formed in an area between the pair of detecting electrodes (6) and is in contact with peripheral portions of the pair of detecting electrodes (6).

2. A gas sensor (1) according to claim 1, wherein a projected area of a contact surface between the gas-sensitive layer (4) and the adhesive layer (7) onto the substrate (15) is equal to or larger than 50% of a projected area of a contact surface of the gas-sensitive layer (4) with the adhesive layer (7) and the detecting electrodes (6) onto the substrate (15).

## Patentansprüche

1. Gassensor (1), der umfasst:
ein Substrat (15) das enthält:
a) eine Halbleiter-Grundplatte (2), die mit einem Öffnungs-Abschnitt (21) versehen ist, der in der Dickenrichtung durch sie hindurch verläuft,
b) isolierende Schichten (31, 32, 33, 34), die an der Halbleiter-Grundplatte (2) ausgebildet sind und einen Trennwand-Abschnitt (39) an einer Stelle aufweisen, die dem Öffnungs-Abschnitt (21) entspricht,
c) einen Heizwiderstand (5), der an dem Trennwand-Abschnitt (39) der isolierenden Schichten (31, 32, 33, 34) ausgebildet ist, und
d) eine schützende Schicht (35), die auf den isolierenden Schichten (31, 32, 33, 34) so ausgebildet ist, dass sie den Heizwiderstand (5) abdeckt,
eine gasempfindliche Schicht (4), die auf dem Substrat (15) ausgebildet ist und eignen Metalloxid-Halbleiter enthält, dessen elektrische Eigenschaften sich in Abhängigkeit von einer Änderung einer Konzentration einer zu erfassenden bestimmten Gaskomponente in einem Gasgemisch als einem Hauptbestandteil ändern,
ein Paar Erfassungselektroden (6) zum Erfassen einer Änderung der elektrischen Eigenschaften der gasempfindlichen Schicht (4),
wobei die Erfassungselektroden (6) und die gasempfindliche Schicht (4) auf der schützenden Schicht (35) des Substrats (15) ausgebildet sind, und
die Erfassungselektroden (6) anliegend mit der schützenden Schicht (35) in Eingriff sind, und
wobei eine gesamte Oberfläche der Erfassungselektroden (6) an der der gasempfindlichen Schicht (4) zugewandten Seite mit der gasempfindlichen Schicht (4) anliegend in Eingriff ist,
**dadurch gekennzeichnet, dass**
die Erfassungselektroden (6), in Draufsicht gesehen, kammförmig sind, und
eine isolierende Haftschicht (7) auf dem Substrat (15) vorhanden ist, an der schützenden Schicht (35) des Substrats (15) ausgebildet ist und in Kontakt mit der gasempfindlichen Schicht (4) ist, um die Haftung zwischen dem Substrat (15) und der gasempfindlichen. Schicht (4) zu verbessern, und
die Haftschicht (7) in einem Bereich zwischen den paarigen Erfassungselektroden (6) ausgebildet ist und in Kontakt mit Randabschnitten der paarigen Erfassungselektroden (6) ist.

2. Gassensor (1) nach Anspruch 1, wobei eine auf das Substrat (15) projizierte Fläche einer Kontaktfläche zwischen der gasempfindlichen Schicht (4) und der Klebeschicht (7) genauso groß ist wie oder größer als 50 % einer auf das Substrat (15) projizierten Fläche einer Kontaktfläche der gasempfindlichen Schicht (4) und der Klebeschicht (7) und den Erfassungselektroden (6).

## Revendications

1. Capteur de gaz (1) comprenant :
un substrat (15) incluant
(a) une plaque de base semi-conductrice (2) formée avec une portion d'ouverture (21) qui la traverse en direction de l'épaisseur,
(b) des couches d'isolation (31, 32, 33, 34) formées sur la plaque de base semi-conductrice (2) et comportant une portion de paroi de partition (39) à une place correspondant à la portion d'ouverture (21),
(c) une résistance de chauffage (5) formée sur la portion de paroi de partition (39) des couches d'isolation (31, 32, 33, 34), et
(d) une couche de protection (35) formée sur les couches d'isolation (31, 32, 33, 34) de manière à recouvrir la résistance de chauffage (5),
une couche sensible au gaz (4) formée sur le substrat (15) et contenant un semi-conducteur à oxyde métallique dont les caractéristiques électriques varient en fonction de la variation d'une concentration d'un composant gazeux particulier dans un mélange gazeux à détecter, comme constituant majeur,
une paire d'électrodes de détection (6) pour détecter une variation des caractéristiques électriques de la couche sensible au gaz (4),
dans lequel les électrodes de détection (6) et la couche sensible au gaz (4) sont formées sur la couche de protection (35) du substrat (15), et
les électrodes de détection (6) sont engagées à butée avec la couche de protection (35), et
dans lequel l'entièreté d'une surface des électrodes de détection (6) sur le côté qui fait face à la couche sensible au gaz (4) est engagée à butée avec la couche sensible au gaz (4),
**caractérisé en ce que**
les électrodes de détection (6) présentent une forme de peigne en vue en plan, et
une couche adhésive d'isolation (7) est pourvue sur le substrat (15), formé sur la couche de protection (35) du substrat (15), et est en contact avec la couche sensible au gaz (4), pour améliorer l'adhésion entre le substrat (15) et la couche sensible au gaz (4), et
la couche adhésive (7) est formée dans une zone entre la paire d'électrodes de détection (6) et est en contact avec des portions périphériques de la paire d'électrodes de détection (6).

2. Capteur de gaz (1) selon la revendication 1, dans lequel une aire projetée d'une surface de contact entre la couche sensible au gaz (4) et la couche adhésive (7) sur le substrat (15) est supérieure ou égale à 50 % de l'aire projetée d'une surface de contact de la couche sensible au gaz (4) avec la couche adhésive (7) et les électrodes de détection (6) sur le substrat (15).
